# EUROPEAN PATENT SPECIFICATION

(11) **EP 0 590 130 B1**
(45) Date of publication and mention of the grant of the patent: **04.06.1997**
(21) Application number: 93908470.3
(22) Date of filing: 23.03.1993
(51) Int. Cl.: C08L 83/04

(54) **ONE-PART ROOM TEMPERATURE VULCANIZING COMPOSITIONS WITH IMPROVED OIL RESISTANCE AND ADHESION**
Bei Umgebungstemperatur vulkanisierbare Einkomponentenzusammensetzungen mit verbesserter Ölbeständigkeit und Adhäsion
COMPOSITIONS DE VULCANISATION A LA TEMPERATURE AMBIANTE, EN UNE PARTIE, A RESISTANCE A L'HUILE ET A ADHESION AMELIOREES

(30) Priority: 25.03.1992 US 857202
(43) Date of publication of application: 06.04.1994
(73) Proprietor: GENERAL ELECTRIC COMPANY, Schenectady, NY 12345 (US)
(72) Inventor: DZIARK, John, Joseph, Malta, NY 12020 (US)
(74) Representative: Szary, Anne Catherine, Dr.
(86) International application number: US9302625
(87) International publication number: WO9319130

(56) References cited:
- EP-A- 0 050 453
- EP-A- 0 261 418
- US-A- 4 514 529
- US-A- 4 960 847
- US-A- 5 064 898

## Description

### BACKGROUND OF THE INVENTION

The present invention relates to one-part room temperature vulcanizing (RTV) silicone rubber compositions which are suitable for formed in place gasket (FIPG) applications. More particularly, the invention relates to RTV rubber compositions having good resistance to hot engine oil and good adhesion to metal parts and which are especially adapted for automotive applications. The materials also have improved retention of tensile strength in adverse environments.

RTV rubber compositions are known in the art. Such compositions are known for their ability to resist change at elevated temperatures and exposure to adverse conditions over extended periods of time. In general, materials are needed which have the outstanding properties such as good tensile strength and also retain such properties after prolonged exposure to chemical agents known to reduce or diminish their performance. In particular applications, such as gasketing applications in automobile engines, good adhesion at room temperature, tensile strength, fast curing and oil resistance are essential.

Efforts have been made in the past to produce RTV silicone elastomer compositions having increased strength and adhesion.

U.S. Patent No. 4,514,529 to Beers et al. discloses a low modulus one component RTV silicone elastomer composition having oil resistance and high elongation. The silicone elastomer is formed of a silanol terminated diorganosiloxane base polymer, a tin catalyst, an oxime cross-linking agent and low moisture fillers including stearic acid treated calcium carbonate. The material is useful as a gasket sealant as well as an FIPG in an automobile engine. According to Beers et al., column 6, lines 12-18, the compositions containing stearic acid treated CaCO₃ have a modulus value at 50% of 517 KPa (75 psi) or less; at 75% the modulus is 483 KPa (70 psi) or less; and at 100% the modulus is 110 psi with 621 KPa (90 psi) being preferred.

Lucas et al., U.S. Patent No. 4,528,353 discloses adhesion promoters for one component RTV silicone compositions. Exemplary materials include a variety of diverse substances including gamma-aminopropyl triethoxysilane (GAP). The materials are useful in alkoxy functional RTV materials. Ketoxime materials are not discussed.

EP-A-0050453 discloses an oil-resistant gasket material and packing material obtained by mixing a linear polyorganosiloxane terminated with hydroxyl radicals or silicon-bonded organic moisture-hydrolyzable radicals, at least 0.5 percent on the average of the organic radicals being alkenyl radicals, and having a viscosity at 25°C on the average of 0.0001 to 0.1 m²/s, filler, a silane or siloxane having per molecule at least one aminoalkyl radical bonded to silicon atoms through a silicon-carbon bond and at least one radical selected from alkoxy and aminoalkoxy, and a silicon-compound having per molecule at least three silicon-bonded organic moisture-hydrolyzable radicals, and optionally acuring-accleleration catalyst.

EP-A-0261418 discloses a gasket and packing material which exhibits excellent adhesiveness to substrates and resistance to degradation of properties when exposed to hot hydrocarbon oils and coolants such as used in an automobile radiator, made by curing a composition which contains polydimethylsiloxane, an organopolysiloxane having R'₃SiO_{0.5} and SiO₂ units or R'₃SiO_{0.5}, and R'₂SiO, and SiO₂ units, an inorganic filler, an alkoxysilane adhesion promoter, and a ketoxime silicon compound crosslinker.

EP-A-50648998 discloses a room temperatue-curable organopolysiloxane composition, which is capable of giving a cured silicone rubber having excellent resistance against oils, e.g., atuomobile engine oil, may be prepared by blending a silanol-terminated dimethyl polysiloxane, an iminoxy-substituted organosilane compound as a catalyst and an inorganic filler. e.g. zinc oxide, to give a uniform mixture and further admixing the uniform mixture with a trimethylsilyl-terminated dimethyl polysiloxane, an alkenyloxy-substituted organosilane compound, e.g., vinyl triisopropenyloxy silane, and a methyl polysiloxane having a network structure of the molecules as consisting of the mono-functional units of the formula (CH₃)₃SiO_{0.5} and tetrafunctional units of the formula SiO₂.

Although one-part RTV compositions having reasonably good tensile strength and oil resistance are known in the art, it is desirable to provide improved RTV compositions having improved tensile strength, fast cure rates and good room temperature adhesion and which retain strength in the presence of hot engine oil.

It is therefore an object of the present invention to provide one-part RTV rubber composition having good room temperature adhesion and improved tensile strength properties which are retained in the presence of oil.

### SUMMARY OF THE INVENTION

The present invention is based upon the discovery that a combination of a diorganopolysiloxane polymer, an M-stopped fluid, a silica filler, a calcium carbonate filler, and gamma-aminopropyl triethoxysilane will cure at room temperature in the presence of a catalyst and a cross-linking agent to form an RTV elastomer having good room temperature adhesion and improved and retainable tensile strength in the presence of hot engine oil.

In a particular embodiment, the invention comprises (A) a base composition including (A1) 100 parts by weight of a diorganopolysiloxane polymer having a viscosity ranging from 600 to 300,000 mPa·s (cps) at 25°C; (A2) from 3 to 25 parts by weight based upon (A1) of a silica filler; (A3) up to 80 parts by weight based upon (A1) of an M-stopped fluid having a viscosity ranging from 50 to 10,000 cps at 25°C; and (A4) from 50 to about 200 parts by weight based upon (A1) of a calcium carbonate filler treated with 1% weight stearic acid. In addition, the RTV composition also includes (B) a catalyst solution comprising (B1) up to 0.5 parts by weight based upon (A) of a tin based catalyst; (B2) from 2 to 15 parts by weight based upon (A) of a cross-linking agent comprising (a) a methyltris(methylethylketoximo)silane or (b) a vinyltris(methylethylketoximo)silane or mixtures of (a) and (b); and (B3) from 0.1 to 4 parts by weight based upon (A) of a gamma-aminopropyl trimethoxysilane adhesion promoter.

The RTV compositions of the invention have improved room temperature adhesion properties and importantly retain tensile strength in the presence of hot oil.

### DETAILED DESCRIPTION OF THE INVENTION:

The present invention is directed to an RTV curable silicone composition having good adhesion properties and improved tensile strength which is retained in the presence of hot oil. The composition contains (A) a base composition formed of (A1) a diorganopolysiloxane polymer having a viscosity ranging from 600 to 300,000 cps at 25°C; (A2) a silica filler; (A3) an M-stopped fluid; and (A4) a calcium carbonate filler. The base composition (A) is mixed with (B) a catalyst solution including (B1) a tin based catalyst; (B2) a methyl or vinyltris(methylethylketoximo)silane cross-linking agent; and (B3) a gamma-aminopropyl triethoxysilane adhesion promoter.

In accordance with the invention, (A1) is a silanol terminated diorganopolysiloxane having a viscosity ranging from 600 to 300,000, preferably from 2,000 to 200,000 and more preferably from 3,000 to 150,00 mPa·s (cps) at 25°C. (A1) has the formula:

HOR₂SiO(R₂SiO)ₓSiR₂OH

where R is independently selected from monovalent hydrocarbon radicals, free of aliphatic unsaturation containing from 1 to 8 carbon atoms and x varies so that (A1) has a viscosity ranging from 600 to 300,000 cps at 25°C. In the examples below, x is selected so that (A1a) has a viscosity of about 15,000 mPa·s (cps) at 25°C and (A1b) has a viscosity of about 30,000 mPa·s (cps) at 25°C.

(A2) comprises from 3 to 25, preferably from 3 to 20 and more preferably from about 5 to 15 parts by weight based upon (A1) of a reinforcing filler such as fumed silica (SiO₂). The filler preferably has a surface area of between 100 and 300 m²/gm, more preferably, the surface area is about 200 m²/gm in the untreated state. The filler may be treated with various agents so as to prevent the composition from structuring, for example, cyclopolysiloxanes as disclosed in U.S. Patent No. 2,938,009 to Lucas and silazanes as disclosed in U.S. Patent No. 3,635,743 to Smith, or both. The cyclopolysiloxanes may be, for example, a octamethylcyclotetrasiloxane (D4) present in an amount of about 15 to 20 weight percent of the filler. In the examples below, (A2) is a D4 treated fumed silica treated as in Lucas above having a surface area in the untreated state of about 200 m²/gm.

(A3) is a processing aid or plasticizer in the form of an MDM fluid. In particular, (A3) is a trimethylsilyl stopped siloxane fluid having a viscosity ranging from 50 to 10,000, preferably 50 to 3,000 and more preferably 50 to 1,000 mPa·s (cps) at 25°C. In the examples below, the M-stopped fluid is a polymer having the form:

R₃Si(OSiR₂)ₓOSiR₃

where each R is CH₃ and x is selected so that the viscosity is about 100 mPa·s (cps) at 25°C.

In the present invention, the processing aid may be present in an amount of up to 80 parts by weight, based upon (A1), preferably up to about 60 parts by weight based upon (A1) and more preferably up to about 40 parts by weight based upon (A1).

(A4) is a calcium carbonate (CaCO₃) filler which is present in an amount of from 50 to 200 parts by weight based upon (A1), preferably from 50 to 150 parts by weight based upon (A1) and more preferably 50 to 125 parts by weight based upon (A1). In the examples below, the calcium carbonate filler is treated with stearic acid in an amount of about 1% by weight based upon the filler.

(B1) is a tin based catalyst which may be present in an amount of up to 0.50 parts by weight based upon 100 parts of the base composition (A). Preferably, the catalyst is present in an amount from 0.01 to 0.4 parts by weight based upon (A), and more preferably is present in an amount ranging from 0.05 to 0.30 parts based upon (A).

(B2) is a cross-linking agent which may comprise alkyl- or alkenyl- or vinyl-tris(dialkyl- or dialkenyl- or alkylalkenyl-ketoximo)silane. Preferably, (B2) comprises (a) a methyltris(methylethylketoximo)silane or (b) a vinyltris(methylethylketoximo)silane or mixtures of (a) and (b). The cross-linking agent is present in an amount from 2 to 15 parts by weight based upon 100 parts of the base composition (A), preferably from 2 to 10 parts by weight based upon (A), and more preferably from 3 to 7 parts by weight based upon (A).

(B3) is gamma-aminopropyl triethoxysilane (GAP) adhesion promoter present in an amount from 0.1 to 4 parts by weight based upon 100 parts of the base composition (A). Preferably the GAP is present in an amount from 0.2 to 2 parts by weight based upon (A) and more preferably is present in an amount ranging from 0.3 to 1.5 parts by weight based upon (A).

The following examples demonstrate the effect of the present invention. Examples 1 and 2 describe the preparation and testing of sealants which do not contain calcium carbonate but do contain GAP. Examples 3-5 describe the preparation and testing of sealants according to the present invention which contain both calcium carbonate and GAP. Examples 6 and 7 have no calcium carbonate or GAP. In Example 7, a tetrakis(methylethylketoximo)silane is substituted for the GAP.

### Example 1

An extruder was set up to combine the following ingredients in the following proportions:
- (A): base composition:
- (A1a): silanol polymer (approximately 15,000 cps at 25°C) HOR₂SiO(R₂SiO)ₓSiR₂OH - 100 parts by weight;
- (A2): D4 treated fumed silica, 200 m²/gm in the untreated state - 13 parts by weight based upon A1;
- (A3): M-stopped fluid (plasticizer) - 5 parts by weight based upon (A1).

The above materials were added to the extruder to constitute the base composition.
- (B): Catalyst solution - 4.85 parts by weight based upon 100 parts (A) is added to the base composition in the following proportions:
- (B1): (a) methyltris(methylethylketoximo)silane (MOS) - 3 parts by weight based upon 100 parts of the base composition;
- (B1): (b) vinyltris(methylethylketoximo)silane (VOS) - 1 part by weight based upon 100 parts of the base composition (A);
- (B2): gamma-aminopropyl triethoxysilane - 0.75 parts by weight based upon 100 parts of the base composition (A); and
- (B3): dibutyltindilaurate (DBTDL)-0.1 parts by weight based upon 100 parts by weight of the base composition (A).

The sealant was tested and the results are listed on Table 1-A, Example 1. As can be seen from the Table, when cured for 7 days at 24°C (75°F) and 50% Relative Humidity (R.H.), the material had a tensile strength of 2022 KPa (293 psi). A similarly cured sheet after 7 days immersion in 5W30 engine oil at 150°C had a tensile strength of 449 KPa (65 psi). Thus, the sealant retained approximately 22% of its initial tensile strength.

Lap shear adhesion was also measured on both Alclad aluminum and carbon steel. On Alclad aluminum, the sealant had a shear strength of 1283 KPa (186 psi) and 5% cohesive failure with 2.36 mm (93 mils) of deflection before failure.

### Example 2

An extruder was set up to combine the following ingredients in the following proportions:

| MATERIAL | | CONCENTRATION |
|---|---|---|
| (A1a) | Silanol polymer (≈15,000 cps) | 100 parts |
| (A2) | D4 treated fumed silica | 13 parts |
| (A3) | M-stopped fluid | 0 parts |

The above materials were added to the first section of the extruder to constitute the base portion of the RTV sealant. The catalyst solution described in Example 1 was added to the later section of the extruder at 4.85 parts per 100 parts of (A).

The sealant was tested and the results are listed in Table 1-A, Example 2. As can be seen from the Table, this material, when cured for 7 days at 75°C and 50% R.H., had a tensile strength of 2118 KPa (307 psi). A similarly cured sheet after 7 days immersion 5W30 engine oil at 150°C had a tensile strength of 366 KPa (53 psi). Thus, the sealant retained only approximately 17% of its initial tensile strength.

Lap shear adhesion was also measured on both Alclad aluminum and cold rolled steel. On Alclad aluminum, the sealant gave at 1063 KPa (154 psi) and 50% cohesive failure with 1.98 mm (78 mils) of deflection before failure.

### Example 3

An extruder was set up to combine the following ingredients in the following proportions:

| MATERIAL | | CONCENTRATION |
|---|---|---|
| (A1a) | Silanol polymer (≈15,000 cps) | 100 parts |
| (A2) | D4 treated fumed silica | 12 parts |
| (A3) | M-stopped fluid | 5 parts |
| (A4) | Stearic acid treated | |
| | Calcium Carbonate | 50 parts |

The above materials were added to the first section of the extruder to constitute the base portion of the RTV sealant.

The catalyst solution was added to the later section of the extruder as described in Example 1, at 4.85 parts per 100 parts of base.

The sealant was tested and the results are listed in Table 1-A (Example 3). As can be seen from the Table this material, when cured for 7 days at 24°C (75°F) and 50% R.H., had a tensile strength of 2084 KPa (302 psi). A similarly cured sheet after 7 days immersion in 5W30 engine oil at 150°C had a tensile strength of 863 KPa (125 psi). Thus, the sealant retained approximately 41% of its initial tensile strength.

Lap shear adhesion was also measured on both Alclad aluminum and carbon steel. On Alclad aluminum, this sealant gave 1449 KPa (210 psi) and 25% cohesive failure with 2.39 mm (94 mils)of deflection before failure.

### Example 4

An extruder was set up to combine the following ingredients in the following proportions:

| MATERIAL | | CONCENTRATION |
|---|---|---|
| (A1a) | Silanol polymer (≈15,000 cps) | 100 parts |
| (A2) | D4 treated fumed silica | 10 parts |
| (A3) | M-stopped fluid | 5 parts |
| (A4) | Stearic acid treated | |
| | Calcium Carbonate | 100 parts |

The above materials were added to the first section of the extruder to constitute the base portion of this RTV sealant.

The catalyst solution was added in the later section of the extruder as described in Example 1, at 4.85 parts per 100 parts of base.

The sealant was tested and the results are listed in Table 1-A (Example 4). As can be seen from the Table, when cured for 7 days at 24°C (75°F) and 50% R.H., this material had a tensile strength of 2036 KPa (295 psi). A similarly cured sheet after 7 days immersion in 5W30 engine oil at 150°C had a tensile strength of 1346 KPa (195 psi). Thus, the sealant retained approximately 66% of its initial tensile strength.

Lap shear adhesion was also measured on both Alclad aluminum and carbon steel. On Alclad aluminum, the sealant gave 1249 KPa (181 psi) and 25% cohesive failure with 2.31 mm (91 mils) of deflection before failure.

### Example 5

An extruder was set up to combine the following ingredients in the following proportions:

| MATERIAL | | CONCENTRATION |
|---|---|---|
| (A1a) | Silanol polymer (≈15,000 (cps) mPa.s) | 100 parts |
| (A2) | D4 treated fumed silica | 10 parts |
| (A3) | M-stopped fluid | 0 parts |
| (A4) | Stearic acid treated | |
| | Calcium Carbonate | 100 parts |

The above materials were added to the first section of the extruder to constitute the base portion of this RTV sealant.

The catalyst solution was added in the later section of the extruder as described in Example 1, at 4.85 parts per 100 parts of base.

The sealant was tested and the results are listed in Table 1-B (Example 5). As can be seen from the Table, when cured for 7 days at 24°C (75°F) and 50% R.H., this material had a tensile strength of 2118 KPa (307 psi). A similarly cured sheet after 7 days of immersion in 5W30 engine oil at 150°C had a tensile strength of 1566 KPa (227 psi). Thus the sealant retained approximately 74% of its initial tensile strength.

Lap shear adhesion was also measured on both Alclad aluminum and carbon steel. On Alclad aluminum, this sealant gave 1380 KPa (200 psi) and 10% cohesive failure with 2.08 mm (82 mils) of deflection before failure.

The above examples demonstrate the improved elastomer stability after immersion in hot engine oil when calcium carbonate is used in these formulations.

Examples 6-9 are prepared in the same way as Examples 1-5 except that in Examples 8-9 the silanol polymer (A1b) having a viscosity of about 30,000 (cps) mPa.s at 25°C is used instead of the lower viscosity (Ala). Amino functional silanes such as gamma-aminopropyl triethoxysilane are good adhesion promoters in the above systems but sealants containing this material can have poor retention of tensile strength after immersion in hot oil. Example 1 is one such sealant which has good adhesion but poor retention of physical properties after immersion in the engine oil.

Sealants which contain non-amino functional silane can have good retention of tensile strength after hot oil immersion but often do not have good adhesion. Examples 6 and 7 respectively contain no adhesion promoter and a non-amino functional adhesion promoter such as tetrakis(methylethylketoximo)silane. These materials have good retention of physical properties after immersion in hot oil retaining 78% and 57%, respectively, of their initial tensile strength. However, both have poor adhesion, 276 Kpa (40 psi) and 179 KPa (26 psi) lap shear strength, respectively, to Alclad aluminum.

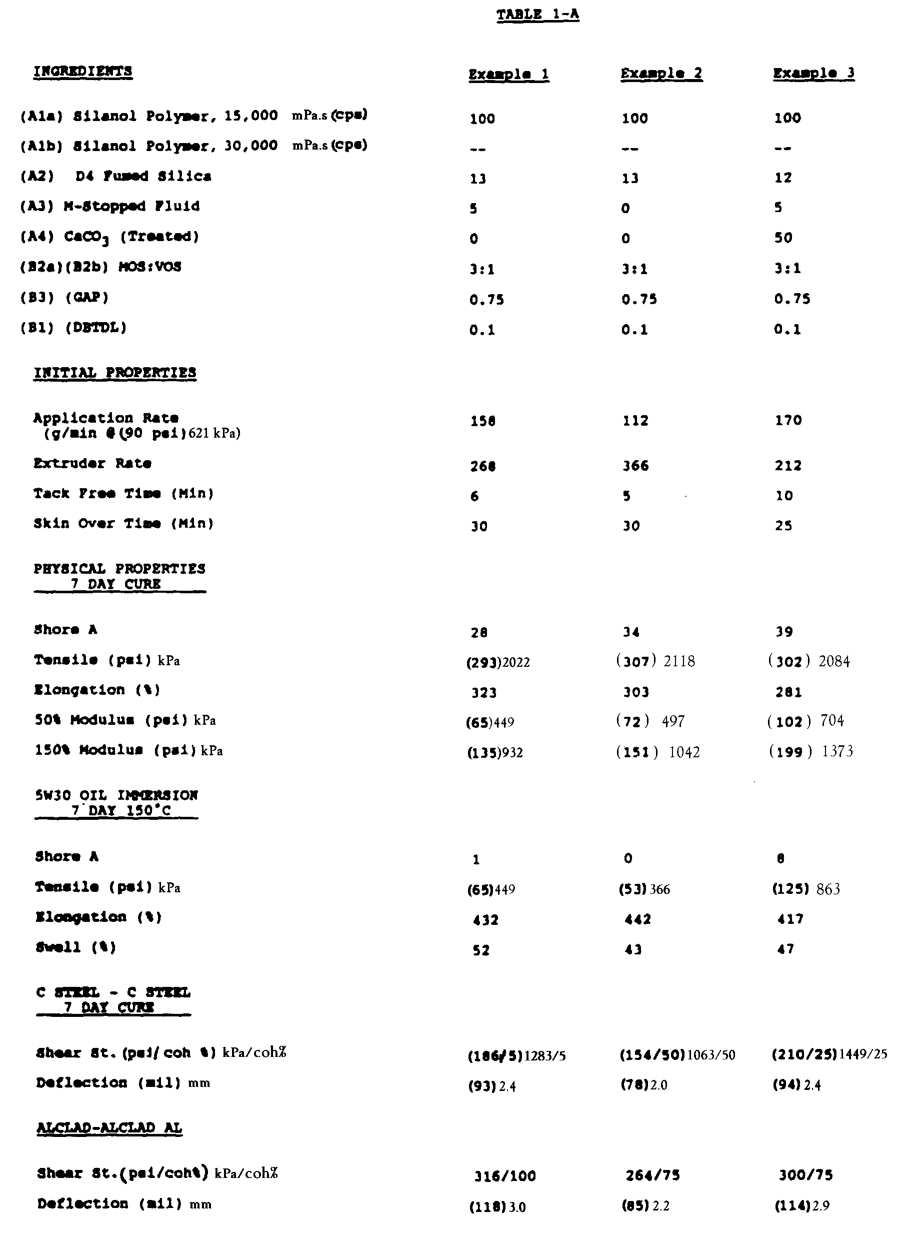

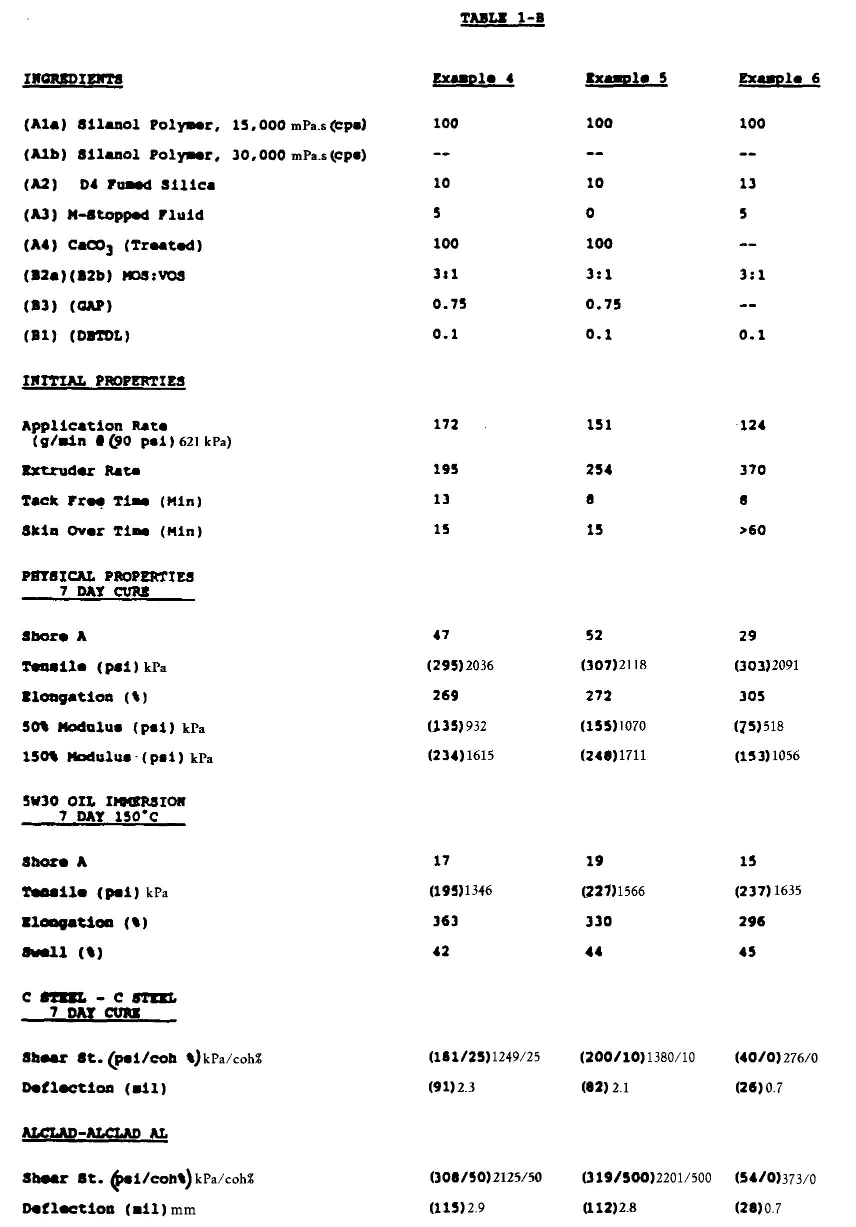

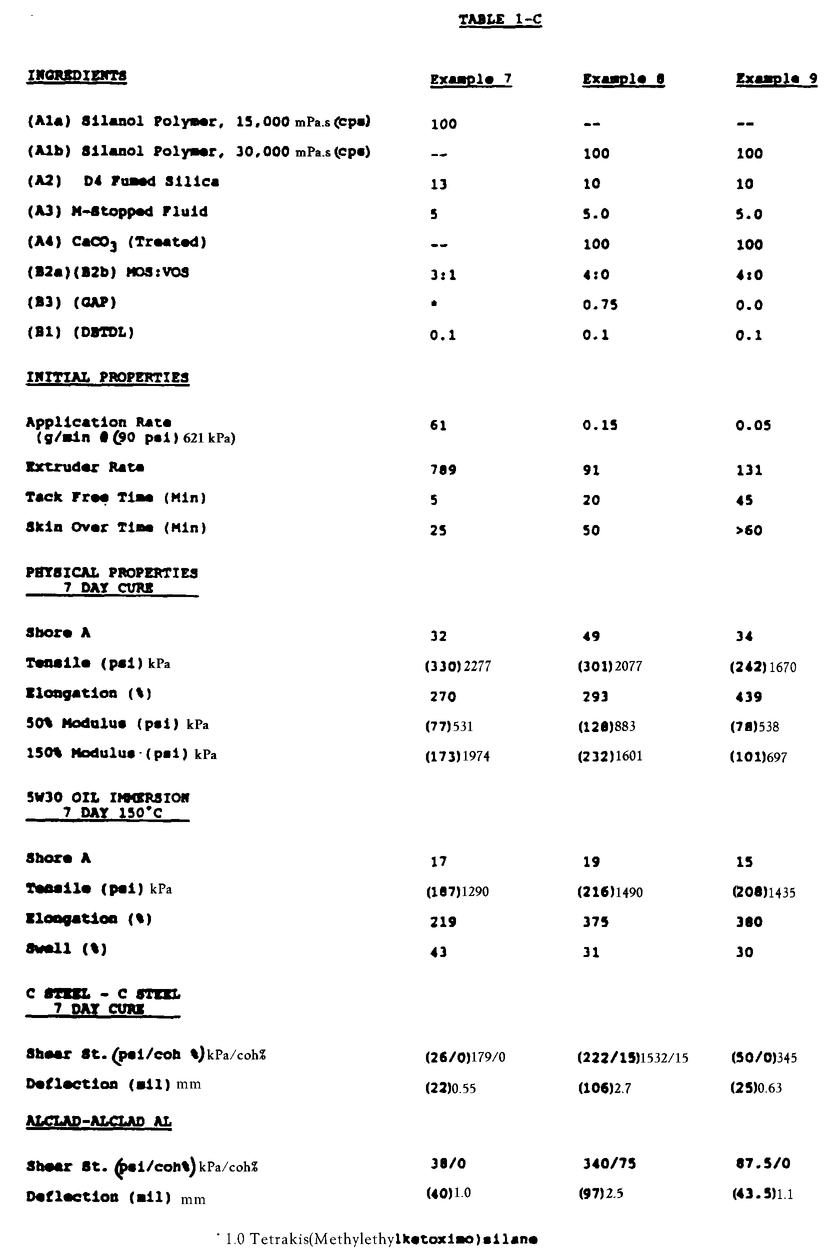

In the Examples above, the lap shear test comprises coating paired substrates e.g., Alclad aluminum - Alclad aluminum and carbon steel - carbon steel, with a given area 1.27 x 2.54 cm (1/2" x 1") and thickness 0.508 mm (0.02") of the sealant composition contacting the two coated areas allowing the compositions to cure, and pulling apart the substrates in a shear direction. The first number in the lap shear line is shear strength in KPa (psi), or the force required to cause the substrates to separate. The second number to the right of the slash is cohesive failure percent, or the amount of material remaining on the substrate with the highest failure (the least amount of sealant). Because of differential thermal expansion which occurs between two dissimilar engine components, Movement Capability is important. Movement Capability is tested by measuring the amount of deflection in a lap shear test specimen which occurs before the test specimen breaks i.e., the amount of movement in the lap shear specimen before failure. Deflection before failure is given in mm (mils).

From the foregoing, it can be seen that calcium carbonate improves tensile strength after oil immersion, and GAP promotes adhesion. A formulation which has GAP but no calcium carbonate has good adhesion but poor oil resistance, see Examples 1 and 2. A composition having calcium carbonate but no GAP has poor adhesion but good oil resistance, see Example 9.

The compositions having a combination of both calcium carbonate and GAP exhibit good oil resistance and good adhesion as illustrated in Examples 3, 4, 5 and 8. Surprisingly, the combination of CaCO₃ and GAP also imparts faster skin-over time (SOT) and faster tack free time (TFT), as best illustrated in Examples 8 and 9. See also Examples 3-5 for relatively fast SOT and TFT.

Two important properties of a Silicone FIPG gasketing material are adhesion and retention of physical properties after oil immersion. In automotive gasketing applications, these sealants are applied in the uncured state.

Skin-Over-Time is defined as the time for the surface to develop a semi-resilient skin. Tack-Free-Time is defined as the time in which the material becomes dry to the touch. Both of these properties are important in automotive applications because they are indicators of fast cure rates. A fast cure is desirable because engines can not only be pressure tested for "blow-out" resistance but can be started (i.e., actually run) shortly after engine assembly. This speeds up production and allows early quality control testing and correction of product defects. It is desirable for the sealant to have a slight "skin" during these tests.

Inclusion of the adhesion promoter gamma-aminopropyl triethoxysilane (GAP) into a calcium carbonate filled ketoxime sealant not only decreases the Tack-Free-Time and Skin-Over-Time but also significantly increases movement capability while increasing the modulus of the cured elastomer. Examples 8 and 9 in Table 1-C list results generated on two samples of ketoxime sealant. Example 8 contains GAP. Example 9 contains no GAP. Except for this difference, the compositions are identical and were made under the same conditions. As can be seen, the GAP containing material had a shorter Tack-Free-Time and a shorter Skin-Over-Time. In addition, these high-modulus, GAP containing materials have better movement capability than a similar system without GAP. The GAP containing material gave an average of 106 and 97 mils of deflection (the amount of movement of the test sample before failure) on steel and aluminum, respectively, whereas the material with no GAP gave an average of only 0.63 and 1.10 mm (25 and 43.5 mils) of deflection on steel and aluminum.

While the use of calcium carbonate is known as illustrated in the Beers et al. patent referred to above, the modulus achieved in the present invention is much improved over the Beers et al. reference. In particular, the present invention has modulus strengths with CaCO, which are higher than the modulus strengths set forth in Beers et al. For example, in the present invention, the modulus at 50% is between about 690 and 1070 KPa (100 and 155 psi) and at 150% it is between 1373 and 1725 KPa (199 and 250 psi). In Beers et al., the modulus at 50% is 517 KPa (75 psi) or less with 345 KPa (50 psi) being preferred and the modulus at 100 is 759 KPa (110 psi) with 621 KPa (90 psi) being preferred.

While there has been described what at present are considered to be the preferred embodiments of the present invention, it will be readily apparent to those skilled in the art that various changes may be made therein without departing from the invention and it is intended in the appended claims to cover such changes and modifications as fall within the true spirit and scope of the invention.

## Claims

1. A one-part RTV composition consisting essentially of:
(A) a base composition consisting essentially of:
(A1) 100 parts by weight of a silanol terminated diorganopolysiloxane having a viscosity of 600 to 300,000 mPa.s (cps) at 25°C having the formula HOR₂SiO(R₂SiO)ₓSiR₂OH where R is independently selected from monovalent hydrocarbon radicals, free of aliphatic unsaturation containing from 1 to 8 carbon atoms and x varies so that (A1) has a viscosity ranging from 600 to 300,000mPa.s (cps) at 25°C;
(A2) from 3 to 25 parts by weight based upon (A1) of a silica filler having a surface area of 100 to 300 m²/gm in the untreated state;
(A3) up to 80 parts by weight based upon (A1) of a trimethylsilyl (M) stopped siloxane fluid having a viscosity ranging from 50 to 10,000 mPa.s (cps) at 25°C; and
(A4) from 50 to 200 parts by weight based upon (A1) of calcium carbonate, said calcium carbonate having been treated with stearic acid in an amount of about 1 weight percent stearic acid based on the weight of calcium carbonate;
(B) a catalyst solution comprising:
(B1) up to 0.5 parts by weight based upon 100 parts of the base composition (A) of a tin based catalyst;
(B2) from 2 to 15 parts by weight based upon 100 parts of the base composition (A) of a cross-linking agent selected from alkyl- or alkenyl- or vinyl-tris(dialkyl- or dialkenyl- or alkylalkenyl-ketoximo)silane; and
(B3) from 0.1 to 4 parts by weight based upon 100 parts of the base composition (A) of gamma-aminopropyl triethoxysilane adhesion promoter and the composition when cured for 7 days at 24°C(75°F) and 50% relative humidity has a tensile strength after immersion at 150°C 5W30 engine oil ranging from 862.5 to 1587 KPa (125 to 230 psi) whereby said composition has a shear strength of at least 1380 KPa (200 psi), a 50% modulus ranging from 690 to 1207 KPa (100 to 175 psi) and a 150% modulus ranging from 1380 to 2070 KPa (200 to 300 psi).

2. The RTV composition of Claim 1, with (A1) having a viscosity ranging from 2,000 to 200,000 mPa.s (cps) at 25°C.

3. The RTV composition of Claim 1, with (A1) having viscosity between 3,000 and 150,000 mPa.s (cps) at 25°C.

4. The RTV composition of Claim 1, wherein (A2) is present in an amount ranging from 3 to 20 parts by weight based upon (A1)

5. The RTV composition of Claim 1, wherein (A2) is present in an amount ranging from 5 to 15 parts by weight based upon (A1).

6. The RTV composition of Claim 1, whereiin (A2) has a surface area of about 200 m²/gm in an untreated state.

7. The RTV composition of Claim 1, wherein (A2) is octamethylcyclotetrasiloxane (D4) treated.

8. The RTV composition of Claim 1, wherein (A2) is silazane treated.

9. The RTV composition of Claim 1 wherein (A3) is present in an amount up to 60 parts by weight based on (A1).

10. The RTV composition of Claim 1, wherein (A3) is present in an amount up to 40 parts by weight of (A1).

11. The RTV composition of Claim 1, wherein (A3) has a viscosity from 50 to 3,000 mPa.s (cps) at 25°C.

12. The RTV composition of Claim 1, wherein (A3) has a viscosity ranging from 50 to 1,000 mPa.s (cps) at 25°C.

13. The RTV composition of Claim 1, wherein (A4) is present in an amount ranging from 50 to 125 parts by weight based upon (A1).

14. The RTV composition of Claim 1, wherein (B1) is present in an amount ranging from 0.1 to 0.4 parts by weight based upon 100 parts of the base composition (A).

15. The RTV composition of Claim 1, wherein (B1) is present in an amount ranging from 0.05 to 0.30 parts by weight based upon 100 parts of the base composition (A).

16. The RTV composition of Claim 1, wherein (B1) is a dibutyltindilaurate.

17. The RTV composition of Claim 1, wherein (B2) is present in an amount ranging from 2 to 10 parts by weight based upon 100 parts of the base composition (A).

18. The RTV composition of Claim 1, wherein (B2) comprises (a) methyltris(methylethylketoximo)silane or, (b) vinyltris(methylethylketoximo)silane, or mixtures of (a) and (b).

19. The RTV composition of Claim 1, wherein (B2) is present in an amount ranging from 3 to 7 parts by weight based upon 100 parts of the base composition.

20. The RTV composition of Claim 1, wherein (B3) is present in an amount ranging from 0.2 to 2 parts by weight based upon 100 parts of the base composition (A).

21. The RTV composition of Claim 1, wherein (B3) is present in an amount ranging from 0.3 to 1.5 parts by weight based upon 100 parts of the base composition (A).

## Patentansprüche

1. Einkomponenten-RTV-Zusammensetzung, bestehend im wesentlichen aus:
(A) einer Grundzusammensetzung, bestehend im wesentlichen aus
(A1) 100 Gewichtsteilen eines Silanol-Endgruppen aufweisenden Polydiorganosiloxans mit einer Viskosität von 600 bis 300.000 mPa·s (cps) bei 25°C und der Formel HOR₂SiO(R₂SiO)ₓSiR₂OH, worin R unabhängig ausgewählt ist aus einwertigen Kohlenwasserstoffresten, die frei von aliphatischer Ungesättigtheit sind und von 1 bis 8 Kohlenstoffatomen enthalten, und x derart variiert, daß (A1) eine Viskosität im Bereich von 600 bis 300.000 mPa·s (cps) bei 25°C aufweist;
(A2) von 3 bis 25 Gewichtsteilen, bezogen auf (A1), eines Siliciumdioxid-Füllstoffes mit einer Oberfläche von 100 bis 300 m²/g im unbehandelten Zustand;
(A3) bis zu 80 Gewichtsteilen, bezogen auf (A1), einer Trimethylsilyl(M)-Endgruppen aufweisenden Siloxan-Flüssigkeit mit einer Viskosität im Bereich von 50 bis 10.000 mPa·s (cps) bei 25°C und
(A4) von 20 bis 50 Gewichtsteilen, bezogen auf (A1), von Calciumcarbonat, das mit Stearinsäure in einer Menge von etwa 1 Gew.-% Stearinsäure, bezogen auf das Gewicht des Calciumcarbonats, behandelt worden ist;
(B) eine Katalysator-Lösung, umfassend:
(B1) bis zu 0,5 Gewichtsteile, bezogen auf 100 Teile der Grundzusammensetzung (A), eines Katalysators auf Zinnbasis;
(B2) von 2 bis 15 Gewichtsteile, bezogen auf 100 Teile der Grundzusammensetzung (A), eines Vernetzungsmittels, ausgewählt aus Alkyl- oder Alkenyl- oder Vinyl-tris(dialkyl- oder dialkenyl- oder alkylalkenyl-ketoximo)silan und
(B3) von 0,1 bis 4 Gewichtsteile, bezogen auf 100 Teile der Grundzusammensetzung (A), von γ-Aminopropyltriethoxysilan als Adhäsionsvermittler, wobei die Zusammensetzung, wenn sie 7 Tage bei 24°C (75°F) und 50% relativer Feuchte gehärtet worden ist, eine Zugfestigkeit nach dem Eintauchen in 5W30 Maschinenöl bei 150°C von 862,5 bis 1.587 kPa (125-230 psi) hat, wodurch die Zusammensetzung eine Scherfestigkeit von mindestens 1.380 kPa (200 psi), einen 50%-Modul im Bereich von 670 bis 1.207 kPa (100-175 psi) und einen 150%-Modul im Bereich von 1.380 bis 2.070 kPa (200-300 psi) aufweist.

2. RTV-Zusammensetzung nach Anspruch 1, wobei (A1) eine Viskosität im Bereich von 2.000 bis 200.000 mPa·s (cps) bei 25°C hat.

3. RTV-Zusammensetzung nach Anspruch 1, wobei (A1) eine Viskosität im Bereich von 3.000 bis 150.000 mPa·s (cps) bei 25°C hat.

4. RTV-Zusammensetzung nach Anspruch 1, worin (A2) in einer Menge von 3 bis 20 Gewichtsteilen, bezogen auf (A1), vorhanden ist.

5. RTV-Zusammensetzung nach Anspruch 1, worin (A2) in einer Menge von 5 bis 15 Gewichtsteilen, bezogen auf (A1), vorhanden ist.

6. RTV-Zusammensetzung nach Anspruch 1, worin (A2) eine Oberfläche von 200 m²/g in einem unbehandelten Zustand aufweist.

7. RTV-Zusammensetzung nach Anspruch 1, worin (A2) mit Octamethylcyclotetrasiloxan (D4) behandelt ist.

8. RTV-Zusammensetzung nach Anspruch 1, worin (A2) mit Silazan behandelt ist.

9. RTV-Zusammensetzung nach Anspruch 1, worin (A3) in einer Menge bis zu 60 Gewichtsteilen, bezogen auf (A1), vorhanden ist.

10. RTV-Zusammensetzung nach Anspruch 1, worin (A3) in einer Menge bis zu 40 Gewichtsteilen, bezogen auf (A1), vorhanden ist.

11. RTV-Zusammensetzung nach Anspruch 1, worin (A3) eine Visosität von 50 is 3.000 mPa·s (cps) bei 25°C hat.

12. RTV-Zusammensetzung nach Anspruch 1, worin (A3) eine Visosität von 50 is 1.000 mPa·s (cps) bei 25°C hat.

13. RTV-Zusammensetzung nach Anspruch 1, worin (A4) in einer Menge im Bereich von 50 bis 125 Gewichtsteilen, bezogen auf (A1), vorhanden ist.

14. RTV-Zusammensetzung nach Anspruch 1, worin (B1) in einer Menge im Bereich von 0,1 bis 0,4 Gewichtsteilen, bezogen auf 100 Teile der Grundzusammensetzung (A), vorhanden ist.

15. RTV-Zusammensetzung nach Anspruch 1, worin (B1) in einer Menge im Bereich von 0,05 bis 0,30 Gewichtsteilen, bezogen auf 100 Teile der Grundzusammensetzung (A), vorhanden ist.

16. RTV-Zusammensetzung nach Anspruch 1, worin (B1) Dibutylzinndilaurat ist.

17. RTV-Zusammensetzung nach Anspruch 1, worin (B2) in einer Menge im Bereich von 2 bis 10 Gewichtsteilen, bezogen auf 100 Gewichtsteile der Grundzusammensetzung (A), vorhanden ist.

18. RTV-Zusammensetzung nach Anspruch 1, worin (B2) (a) Methyltris(methylethylketoximo)silan oder (b) Vinyltris(methylethylketoximo)silan oder Mischungen von (a) und (b) umfaßt.

19. RTV-Zusammensetzung nach Anspruch 1, worin (B2) in einer Menge im Bereich von 3 bis 7 Gewichtsteilen, bezogen auf 100 Teile der Grundzusammensetzung, vorhanden ist.

20. RTV-Zusammensetzung nach Anspruch 1, worin (B3) in einer Menge im Bereich von 0,2 bis 2 Gewichtsteilen, bezogen auf 100 Teile der Grundzusammensetzung (A), vorhanden ist.

21. RTV-Zusammensetzung nach Anspruch 1, worin (B3) in einer Menge im Bereich von 0,3 bis 1,5 Gewichtsteilen, bezogen auf 100 Teile der Grundzusammensetzung (A), vorhanden ist.

## Revendications

1. Composition EVF à un composant comprenant principalement :
(A) une composition de base comprenant principalement :
(A1) 100 parties en poids d'un diorganopolysiloxane à fonctions terminales silanol présentant une viscosité de 600 à 300 000 mPa.s (cps) à 25° C, répondant à la formule HOR₂SiO(R₂SiO)ₓSiR₂OH dans laquelle R est indépendamment choisi parmi les radicaux hydrocarbonés monovalents, exempts d'insaturation aliphatique et comportant de 1 à 8 atomes de carbone et x varie de telle manière que (A1) a une viscosité comprise entre 600 et 300 000 mPa.s (cps) à 25° C;
(A2) de 3 à 25 parties en poids, par rapport à (A1), d'une charge de silice présentant une surface spécifique de 100 à 300 m²/g à l'état non traité ;
(A3) jusqu'à 80 parties en poids, par rapport à (A1), d'un fluide siloxane à groupes terminaux triméthylsilyle (M) présentant une viscosité comprise entre 50 et 10 000 mPa.s (cps) à 25°C ; et
(A4) de 50 à 200 parties en poids, par rapport à (A1), de carbonate de calcium, ledit carbonate de calcium ayant été traité par de l'acide stéarique avec une quantité d'environ 1 % en poids d'acide stéarique par rapport au poids du carbonate de calcium ;
(B) une solution de catalyseur comprenant :
(B1) jusqu'à 0,5 partie en poids, par rapport à 100 parties en poids de la composition de base (A), d'un catalyseur à base d'étain ;
(B2) de 2 à 15 parties en poids, par rapport à 100 parties en poids de la composition de base (A), d'un agent de réticulation choisi parmi les alkyl- ou alcényl- ou vinyl-tris(dialkyl- ou dialcényl- ou alkylalcényl-cétoximo)silane; et
(B3) de 0,1 à 4 parties en poids, par rapport à 100 parties de la composition de base (A), de promoteur d'adhésion de type γ-aminopropyltriéthoxysilane et la composition quand on la fait durcir pendant 7 jours à 24° C (75° F) et sous 50 % d'humidité relative a une résistance au décollement par traction, après immersion à 150° C dans de l'huile de moteur 5W30, comprise entre 862,5 et 1587 kPa (125 à 230 psi),
ladite composition présente une résistance au décollement en cisaillement d'au moins 1380 kPa (200 psi), un module à 50 % compris entre 690 et 1207 kPa (100 à 175 psi) et un module à 150 % compris entre 1380 et 2070 kPa (200 à 300 psi).

2. Composition EVF conforme à la revendication 1, avec (A1) présentant une viscosité comprise entre 2000 et 200 000 mPa.s (cps) à 25° C.

3. Composition EVF conforme à la revendication 1, avec (A1) présentant une viscosité comprise entre 3000 et 150 000 mPa.s (cps) à 25°C.

4. Composition EVF conforme à la revendication 1, dans laquelle (A2) est présent en une quantité se situant dans l'intervalle allant de 3 à 20 parties en poids par rapport à (A1).

5. Composition EVF conforme à la revendication 1, dans laquelle (A2) est présent en une quantité se situant dans l'intervalle allant de 5 à 15 parties en poids par rapport à (A1).

6. Composition EVF conforme à la revendication 1, dans laquelle (A2) a une surface spécifique d'environ 200 m²/g à l'état non traité.

7. Composition EVF conforme à la revendication 1, dans laquelle (A2) est un octaméthylcyclotétrasiloxane (D4) traité.

8. Composition EVF conforme à la revendication 1, dans laquelle (A2) est un silazane traité.

9. Composition EVF conforme à la revendication 1, dans laquelle (A3) est présent en une quantité allant jusqu'à 60 parties en poids par rapport à (A1).

10. Composition EVF conforme à la revendication 1, dans laquelle (A3) est présent en une quantité allant jusqu'à 40 parties en poids de (A1).

11. Composition EVF conforme à la revendication 1, dans laquelle (A3) a une viscosité comprise entre 50 et 3 000 mPa.s (cps) à 25° C.

12. Composition EVF conforme à la revendication 1, dans laquelle (A3) a une viscosité se situant dans l'intervalle allant de 50 à 1000 mPa.s (cps) à 25° C.

13. Composition EVF conforme à la revendication 1, dans laquelle(A4) est présent en une quantité comprise entre 50 et 125 parties en poids par rapport à (A1).

14. Composition EVF conforme à la revendication 1, dans laquelle (B1) est présent en une quantité comprise entre 0,1 et 0,4 partie en poids par rapport à 100 parties de la composition de base (A).

15. Composition EVF conforme à la revendication 1, dans laquelle (B1) est présent en une quantité comprise entre 0,05 et 0,30 partie en poids par rapport à 100 parties de la composition de base (A).

16. Composition EVF conforme à la revendication 1, dans laquelle (B1) est le laurate de dibutylétain.

17. Composition EVF conforme à la revendication 1, dans laquelle (B2) est présent en une quantité comprise entre 2 et 10 parties en poids par rapport à 100 parties de la composition de base (A).

18. Composition EVF conforme à la revendication 1, dans laquelle (B2) comprend :
(a) un méthyltris(méthyléthylcétoximo)silane ou,
(b) un vinyltris(méthyléthylcétoximo)silane ou des mélanges de (a) et (b).

19. Composition EVF conforme à la revendication 1, dans laquelle (B2) est présent en une quantité comprise entre 3 et 7 parties en poids par rapport à 100 parties de la composition de base.

20. Composition EVF conforme à la revendication 1, dans laquelle (B3) est présent en une quantité comprise entre 0,2 et 2 parties en poids par rapport à 100 parties de la composition de base (A).

21. Composition EVF conforme à la revendication 1, dans laquelle (B3) est présent en une quantité comprise entre 0,3 et 1,5 parties en poids par rapport à 100 parties de la composition de base (A).
